# EUROPEAN PATENT APPLICATION

(11) **EP 4 542 671 A1**
(43) Date of publication of application: **23.04.2025**
(21) Application number: 23875116.8
(22) Date of filing: 19.09.2023
(51) Int. Cl.: H01M 4/133, H01M 4/36, H01M 4/583, H01M 4/485, H01M 4/1393, H01M 4/04

(54) **DOUBLE-LAYER ELECTRODE FOR HIGH-PERFORMANCE BATTERIES AND MANUFACTURING METHOD THEREOF**

(30) Priority: 06.10.2022 KR 20220127865
(71) Applicant: Korea Institute of Machinery & Materials, Daejeon 34103 (KR)
(72) Inventor: KIM, Myoung Ho, Hwaseong-si Gyeonggi-do 18482 (KR); HYUN, Seung Min, Daejeon 35235 (KR); OH, Minsub, Seoul 01900 (KR); SO, Hye Mi, Daejeon 34120 (KR); LEE, Jinyeong, Daejeon 34116 (KR); SHIM, Hyung Cheoul, Daejeon 34130 (KR)
(74) Representative: Lewis Silkin LLP
(86) International application number: PCT/KR2023/014197
(87) International publication number: WO 2024/076049

(57) **Abstract**

In a double-layer electrode for high-performance batteries and manufacturing method thereof, the double-layer electrode includes first and second layers. The first layer is formed on a base substrate, and has crystalline graphite and carbon mixed with each other. The second layer is formed on the first layer, and has the crystalline graphite.

## Description

### BACKGROUND OF THE INVENTION

### TECHNICAL FIELD

Exemplary embodiments of the present invention relate to a double-layer electrode for high-performance batteries and manufacturing method thereof. More particularly, exemplary embodiments of the present invention relate to a double-layer electrode for high-performance batteries and manufacturing method thereof, capable of performing high energy density and long lifespan during discharge, by manufacturing electrodes used in high-performance batteries such as lithium-ion batteries by patterning using two active materials with different characteristics.

### DISCUSSION OF THE RELATED ART

With the development of next-generation electronic devices such as electric vehicles and wearable devices, demand for energy storage devices that are lightweight and require high energy density is increasing. In particular, in the case of such energy storage devices, research is being actively conducted to improve the materials and structures of electrodes to maintain high energy density even at high output.

The negative electrode active materials for commercial lithium-ion batteries being developed to date have the advantage of stably reacting with lithium ions at low voltages when using a single material, but when performing rapid charging and discharging, there was a problem of a decrease in electrical capacity due to a bottleneck.

Thus, technologies that apply composite negative electrode active materials or apply three-dimensional electrode structures are being developed, as in Koran patent No. 10-1287435, Japanese patent No. 7123251, Japanese patent No. 7033118, US patent No. 9017882, and so on.

However, due to mechanical and electrochemical instability occurring at the interface between active materials, the internal resistance of the entire cell increases due to continuous side reactions, or there is a limitation in correcting the charging and discharging reliability of the battery over a long period of time, even when applying such complex materials or three-dimensional electrode structures.

Related prior arts include Koran patent No. 10-1287435, Japanese patent No. 7123251, Japanese patent No. 7033118, US patent No. 9017882.

### SUMMARY

Exemplary embodiments of the present invention provide a double-layer electrode for high-performance batteries, capable of performing high energy density and long lifespan during discharge, by manufacturing electrodes used in high-performance batteries such as lithium-ion batteries by patterning using two active materials with different characteristics.

In addition, exemplary embodiments of the present invention also provide a manufacturing method of the double-layer electrode.

According to one aspect of the present invention, the double-layer electrode includes first and second layers. The first layer is formed on a base substrate, and has crystalline graphite and carbon mixed with each other. The second layer is formed on the first layer, and has the crystalline graphite.

In an exemplary embodiment, in the first layer, the crystalline graphite and the carbon are mixed with a ratio of 7:3 to 3:7.

According to another aspect of the present invention, the double-layer electrode includes first and second layers. The first layer is formed on a base substrate, and has an electrode active material. The second layer is formed on the first layer, and has an electrode active material. A first pattern portion is formed between a boundary between the first layer and the second layer.

In an exemplary embodiment, the electrode active material may include graphite, carbon, transition metal oxide based cathode materials or anode materials.

In an exemplary embodiment, the electrode active material of the first layer may include spherical crystalline graphite (SCG) or soft carbon (SC), and the electrode active material of the second layer may include the spherical crystalline graphite.

In an exemplary embodiment, the first pattern portion may include a protruding portion and a recessed portion.

In an exemplary embodiment, a second pattern portion may be formed under the base substrate and the first layer.

In an exemplary embodiment, the second pattern portion may include a protruding portion and a recessed portion.

In an exemplary embodiment, the protruding portion may have a circular shape, an oval shape or a polygonal shape.

According to still another aspect of the present invention, in a manufacturing method of a double layer electrode, a first layer having an electrode active material is formed on a base substrate. An upper surface of the first layer is pressed using a first roller. A second layer having an electrode active material is formed on the first layer.

In an exemplary embodiment, in the pressing using the first roller, a first pattern portion may be formed on the first layer, due to a first pattern forming part formed along an outer surface of the first roller.

In an exemplary embodiment, the first pattern forming part may include a protruding pattern, and the first pattern portion may include a protruding portion and a recessed portion.

In an exemplary embodiment, in the forming the second layer, the second layer may be formed on the first layer on which the first pattern is formed, and then the first pattern portion may be formed at a boundary between the first and second layers.

In an exemplary embodiment, in the forming the first layer and in the forming the second layer, the first and second layers may be formed via one of coating processes having a wet coating, a dry coating, and thermally induced phase separation (TIPS) coating.

In an exemplary embodiment, the method may further include pressing a lower surface of the base substrate using a second roller.

In an exemplary embodiment, in the pressing using the second roller, a second pattern portion may be formed on a lower surface of the first layer and the base substrate, due to a second pattern forming part formed along an outer surface of the second roller.

In an exemplary embodiment, the second pattern forming part may include a protruding pattern, and the second pattern portion may include a protruding portion and a recessed portion.

In an exemplary embodiment, in the pressing the lower surface of the base substrate using the second roller, the upper surface of the first layer may be pressed using the first roller at the same time.

According to some exemplary embodiments of the present invention, as an electrode active material, the first layer having the crystalline graphite and the carbon mixed with each other, and the second layer having the crystalline graphite are formed. Thus, a synergistic effect of the advantages of fast ion transport ability may be performed through the advantages of high energy density of the crystalline graphite and the porous structure of the carbon, and thus even with rapid charging and discharging, it has high energy density and may improve battery performance.

In addition, even when various negative or positive electrode materials are applied as the electrode active material, the protruding portion and the recessed portion are formed between the first and second layers as the first pattern portion, so that an adhesive force of the boundary between the first and second layers may be increased and excellent diffusivity and low internal resistance may be maintained. Then, the rate characteristics and capacity retention rate of the electrode may be improved, and high energy density may be secured by securing a high reaction voltage.

The protruding portion and the recessed portion are formed between the first layer and the base substrate as the second pattern portion, and thus the adhesive force of the boundary between the first layer and the base substrate. Then, a stable double-layer electrode structure may be maintained and a long battery life may be secured.

In addition, in forming the first pattern portion or the second pattern portion, the pressing is performed using the roller having the protruding pattern at an outer surface. Thus, an adhesion of the boundaries among the first layer, the second layer and the base substrate may be increased, and a stable structure between inner particles of the first and second layers may be maintained and the first and second pattern portions may be formed at the same time. Then, the efficiency of the process may be improved.

### BRIEF DESCRIPTION OF THE DRAWINGS

FIG. 1 is a cross-sectional view illustrating a double-layer electrode according to an example embodiment of the present invention;
FIG. 2A and FIG. 2B are images showing crystalline state and properties of crystalline graphite and carbon of the double-layer electrode of FIG. 1;
FIG. 3A, FIG. 3B, FIG. 3C and FIG. 3D are graphs showing properties of the double-layer electrode of FIG. 1;
FIG. 4 is a process view illustrating a manufacturing method of the double-layer electrode of FIG. 1;
FIG. 5 is a cross-sectional view illustrating a double-layer electrode according to another example embodiment of the present invention;
FIG. 6 is a process view illustrating a manufacturing method of the double-layer electrode of FIG. 5;
FIG. 7 is a cross-sectional view illustrating a double-layer electrode according to still another example embodiment of the present invention;
FIG. 8 is a process view illustrating a manufacturing method of the double-layer electrode of FIG. 7; and
FIG. 9A, FIG. 9B, FIG. 9C FIG. 9D and FIG. 9E are graphs showing properties of the double-layer electrode of FIG. 7.

### <Reference numerals>

| | | | |
|---|---|---|---|
| 10, 20, 30 : | double-layer electrode | 100, 110, 120 : | first layer |
| 101, 201 : | crystalline graphite | 102 : | carbon |
| 200, 210, 220 : | second layer | 300, 310 : | base substrate |
| 400 : | pressing part | 410 : | first roller |
| 411 : | first pattern forming part | 420 : | second roller |
| 421 : | second pattern forming part | 500 : | first pattern portion |
| 510 : | first protruding portion | 520 : | first recessed portion |
| 600 : | second pattern portion | 610 : | second protruding portion |
| 620 : | second recessed portion | | |

### DETAILED DESCRIPTION OF THE INVENTION

The present invention is described more fully hereinafter with reference to the accompanying drawings, in which exemplary embodiments of the present invention are shown. The present invention may, however, be embodied in many different forms and should not be construed as limited to the exemplary embodiments set forth herein. Rather, these exemplary embodiments are provided so that this disclosure will be thorough and complete, and will fully convey the scope of the present invention to those skilled in the art.

The terminology used herein is for the purpose of describing particular exemplary embodiments only and is not intended to be limiting of the present invention. As used herein, the singular forms "a," "an" and "the" are intended to include the plural forms as well, unless the context clearly indicates otherwise.

It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be explained in detail with reference to the accompanying drawings.

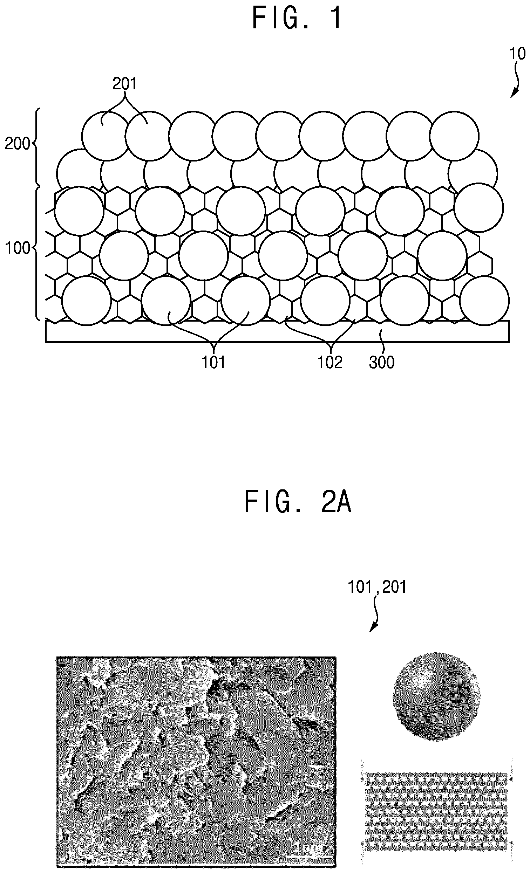

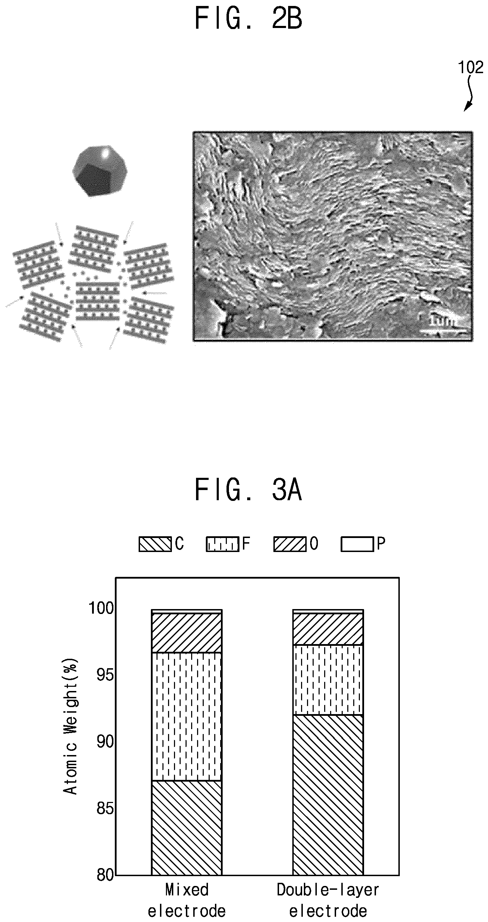

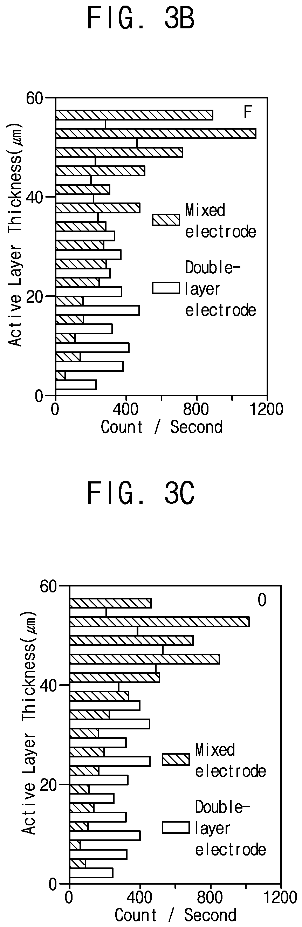

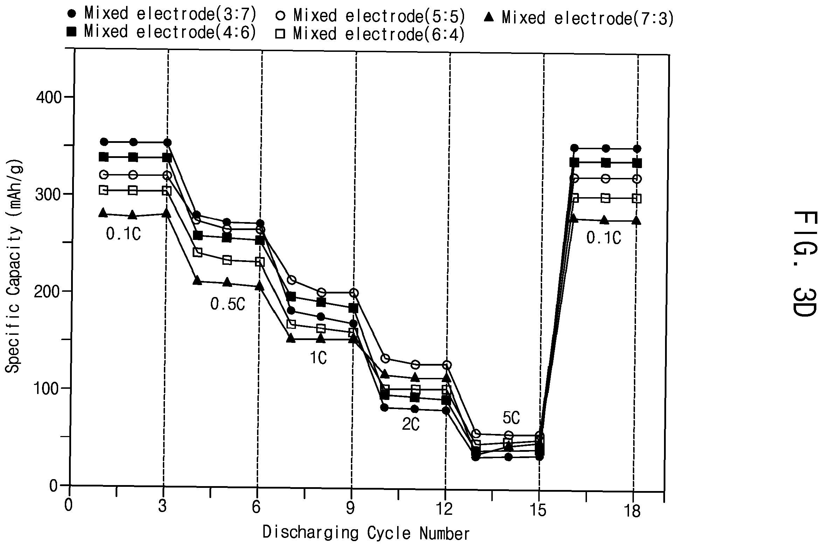

FIG. 1 is a cross-sectional view illustrating a double-layer electrode according to an example embodiment of the present invention. FIG. 2A and FIG. 2B are images showing crystalline state and properties of crystalline graphite and carbon of the double-layer electrode of FIG. 1. FIG. 3A, FIG. 3B, FIG. 3C and FIG. 3D are graphs showing properties of the double-layer electrode of FIG. 1.

Referring to FIG. 1, the double-layer electrode 10 according to the present example embodiment includes a first layer 100 and a second layer 200 both formed on the base substrate 300. The double-layer electrode 10 includes double layers of the first and second layers 100 and 200, and thus is defined as the double-layer electrode.

Here, as illustrated in the figure, the second layer 200 is formed on the first layer 100, and the second layer 200 may be formed via a coating process or like. However, the forming process for the second layer 200 may not be limited thereto.

Likewise, the first layer 100 is also formed on the base substrate 300, and the first layer 200 may be formed via the coating process, but not limited thereto.

For example, when the first and second layers 100 and 200 are formed via the coating process, various kinds of coating process, such as a wet coating, a dry coating or a coating using thermally induced phase separation (TIPS), may be used.

The second layer 200 is pressed as explained below after formed on the first layer 100. Thus, the second layer 200 is stably formed and attached on the first layer 100, and thus the structural stability may be maintained and excellent diffusivity and low internal resistance may be maintained.

In addition, a material of the base substrate 300 is not limited. In addition, any material that can stably form the first layer 100 is sufficient, and may have certain flexibility properties if necessary. Furthermore, the structure of the base substrate 300 is also not limited and may be, for example, a three-dimensional structure substrate including a mesh structure, foam structure, textile structure, etc.

Both of the first and second layers 100 and 200 include an electrode active material, and the double-layer electrode 10 may be used as an electrode of an energy storage device such as a secondary battery.

The electrode active material of the first and second layers 100 and 200 may include graphite, carbon, transition metal oxide based cathode materials or anode materials. Here, the transition metal oxide based cathode materials may be silicon or lithium titanate oxide (LTO), and the anode materials may be LCO (lithium cobalt), LMO (lithium manganese oxide), LFP (lithium titanate oxide), NMC (nickel manganese cobalt), etc.

Hereinafter, as a representative electrode active material included in the first layer 100 and the second layer 200, the example embodiment where the negative electrode active material includes graphite and carbon will be described.

The first layer 100 may include crystalline graphite 101, especially spherical crystalline graphite (SCG), and carbon 102, especially soft carbon (SC), as the electrode active material.

As illustrated in FIG. 1, the first layer 100 may form a structure in which relatively large crystalline graphite is uniformly mixed between carbon particles.

Alternatively, the second layer 200 may include only crystalline graphite 101, particularly spherical crystalline graphite (SCG), as the electrode active material.

Here, due to the structural characteristics of the crystalline graphite, as shown in FIG. 2, the second layer 200 may have a structurally stable structure.

More specifically, referring to FIG. 2A, in the case of the spherical crystalline graphite 101, it has a highly crystalline structure in which spherical crystal forms are uniformly mixed, and accordingly, when configured as an electrode, it has the advantage of high energy density. However, due to the nature of the structure, the number of entrances and exits for ions is small, so there is a disadvantage in that the energy density decreases sharply during rapid charging and discharging.

Alternatively, referring to FIG. 2B, in the case of the soft carbon 102, since it has a porous structure, the number of entrances and exits for ions is greater than that of the crystalline graphite 101, and therefore, a relatively high capacity may be maintained even during rapid charging and discharging. However, because crystallinity is weak, it has the disadvantage of low overall energy density.

Therefore, as in the present example embodiment, in constructing the double-layer electrode 10, the first layer 100 includes a mixture of crystalline graphite 101 and carbon 102, and the second layer 200 includes crystalline graphite 101, and thus the double-layer electrode 10 is formed to be stacked on each other. Then, by utilizing both the advantages of the crystalline graphite 101 and the advantages of the carbon 102, it is possible to maintain a relatively high capacity during charging and discharging while maintaining high energy density.

Specifically, when charging or discharging a battery, the electrolyte is decomposed depending on the type or structure of the electrode, and a solid electrolyte interphase (SEI) layer is formed on the surface of the electrode particle. Here, in the case of carbon with a porous structure, excessive production of the SEI layer due to relatively high side reactions causes problems such as a decrease in reversible capacity and an increase in the internal resistance of the battery.

In this regard, referring to FIG. 3A, in contrast to the case where the electrode is constructed using a single layer of crystalline graphite and carbon (Blended SC & SCG), the case where the electrode is constructed with the double-layer structure as in the present example embodiment (Bi-layered SC & SCG), has the characteristics of being composed of relatively low SEI components (F, O), as a result of comparing the components of the SEI layer.

Accordingly, in the case of the double-layer electrode 10 in the present example embodiment, the SEI component is configured to be low, so that a small number of SEI layers are formed overall. Thus, the problem of a decrease in the reversible capacity of the battery and an increase in internal resistance may be minimized.

In addition, FIG. 3B and FIG. 3C show the comparison of the distribution amount of SEI components according to the depth of the electrode. Compared to the electrode using a single layer (Blended SC & SCG), it may be confirmed that a more uniform SEI layer was formed in the depth direction in the electrode with the double-layer structure (Bi-layered SC & SCG) of the present example embodiment.

Accordingly, in the case of the double-layer electrode 10 in the present example embodiment, a more uniform SEI layer may be formed in the depth direction, leading to smoother transport of lithium ions to the inside of the electrode and reaction with the active material. Then, reducing battery internal resistance and securing capacity during rapid charging and discharging may be minimized.

Referring to FIG. 3D, the crystalline graphite 101 and the carbon 102 may be mixed, for example, at a mixing ratio of 3:7 to 7:3. Here, the mixing ratio means the weight ratio in which two substances are mixed.

The results of testing the electric capacity according to the charging and discharging speed (0.1C to 5C) for the double-layer electrode 10 having this mixing ratio are as follows. When crystalline graphite 101 and carbon 102 have a mixing ratio of 3:7, 4:6, 5:5, 6:4, or 7:3, respectively, as in FIG. 3D, relatively high capacity may be maintained. In addition, in rapid charging and discharging, relatively high capacity may be maintained at the same mixing ratio of 5:5.

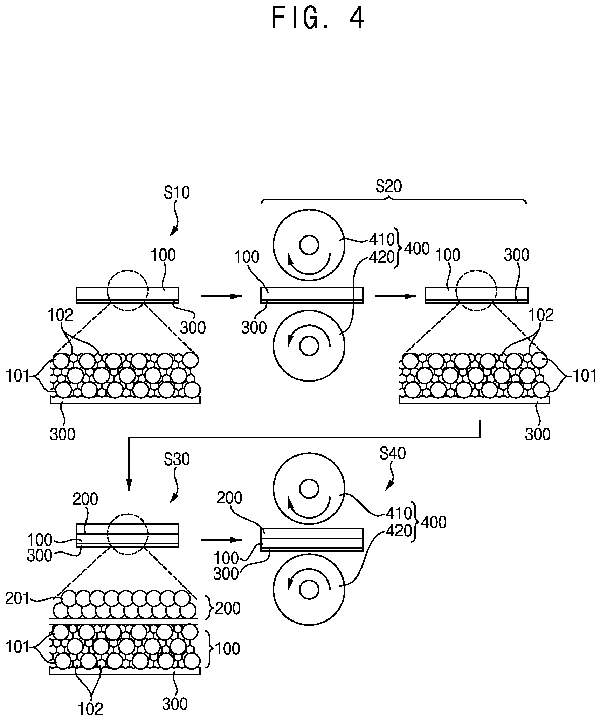

FIG. 4 is a process view illustrating a manufacturing method of the double-layer electrode of FIG. 1.

Referring to FIG. 4, in the manufacturing method of the double-layer electrode 10, the first layer 100 is formed on the base substrate 300 (step S10).

Here, the first layer 100 may be formed via the coating process, but the process of forming the first layer 100 is not limited thereto.

As explained above, the first layer 100 includes the crystalline graphite 101 and the carbon 102. The first layer 100 may be formed by coating a solution in which the crystalline graphite 101 and the carbon 102 are mixed at a uniform mixing ratio on the base substrate 300 and drying it.

Then, the base substrate 300 and the first layer 100 formed on the base substrate 300 are pressed by a pressing part 400 (step S20).

The pressing part 400, as illustrated in the figure, includes a pair of first and second rollers 410 and 420. The first roller 410 presses an upper surface of the first layer 100 on the first layer 100, and the second roller 420 presses a lower surface of the base substrate 300 under the base substrate 300.

In addition, the first layer 100 and the base substrate 300 are continuously moved to be pressed by the first and second rollers 410 and 420. Here, outer surfaces of the first and second rollers 410 and 420 have a hard surface, and then the first layer 100 and the base substrate 300 are compressed and pressurized.

Then, an adhesion at a boundary between the first layer 100 and the base substrate 300 is increased, and since the entire of the first layer 100 and the base substrate 300 is pressurized, the crystalline graphite 101 and the carbon 102 of the first layer 100 may be formed to have more dense and stable internal structure.

Then, the second layer 200 is formed on the first layer 100 (step S30).

Here, the second layer 200 may be formed via the coating process, but the forming process of the second layer 200 may not be limited thereto.

In addition, the second layer 200 includes the crystalline graphite 101, and the second layer 200 may be formed by coating a solution containing the crystalline graphite 101 on the first layer 100 and drying it.

Then, after forming the second layer 200, the first roller 410 presses an upper surface of the second layer 200, and the second roller 420 additionally presses the lower surface of the base substrate 300 (step S40).

Then, the adhesion at a boundary between the first layer 100 and the second layer 200 is increased, and since the entire of the first and second layers 100 and 200 is pressurized, the crystalline graphite 101of the second layer 200 may be formed to have more dense and stable internal structure.

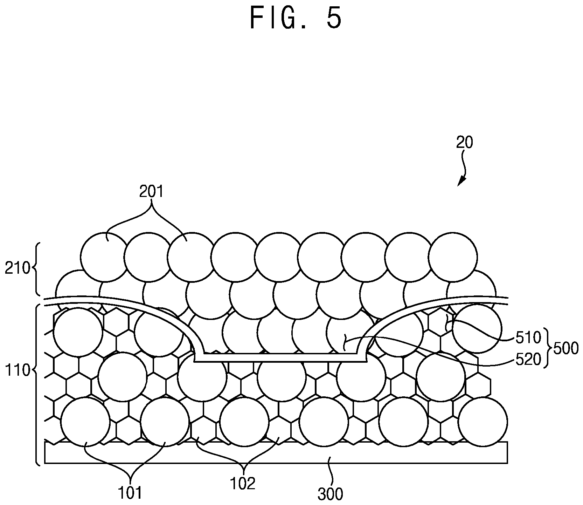

FIG. 5 is a cross-sectional view illustrating a double-layer electrode according to another example embodiment of the present invention.

The double-layer electrode 20 according to the present example embodiment is substantially same as the double-layer electrode 10 of FIG. 1, except for a first pattern portion 500 formed at the boundary between first and second layers 110 and 210, and then same reference numerals are used for the same elements and any repetitive explanation will be omitted.

Referring to FIG. 5, the double-layer electrode 20 according to the present example embodiment includes the first layer 110, and the second layer 120 formed on the first layer 110.

In addition, as in the previous example embodiment of FIG. 1, the first layer 110 may include cathode materials and anode materials as the electrode active material, as explained above. However, in the present example embodiment, the first layer 110 is explained to include the crystalline graphite 101, specially the spherical crystalline graphite (SCG), and the carbon 102, specially the soft carbon (SC). Likewise, the second layer 120 may include cathode materials and anode materials as the electrode active material, but is explained to include the crystalline graphite 101, specially the spherical crystalline graphite (SCG).

Furthermore, the material properties and advantages of the double-layer electrode 20 are also the same, so further description is omitted.

In the double-layer electrode 20 according to the present example embodiment, the first pattern portion 500 is formed at the boundary between the first and second layer 110 and 120, which is an upper surface of the first layer 110 and a lower surface of the second layer 210.

Here, the first and second layers 110 and 120 are formed to be in close contact with each other. A pattern opposite to the pattern of the upper surface of the first layer 110 is formed on the lower surface of the second layer 210. Thus, this pattern is defined as the first pattern portion 500 for the convenience of explanation.

As illustrated in the figure, the first pattern portion 500 includes a first protruding portion 510 protruded upwardly and a first recessed portion 520 recessed downwardly, with respect to the first layer 110. The first protruding portion 510 and the first recessed portion 520 are continuously formed on the boundary.

In addition, as explained below, the first recessed portion 520 is recessed by pressure from a pattern forming part having a predetermined protruding shape. Depending on the characteristics of the formation of the recessed portion due to such pressurization, the area extending from the first recessed portion 520 to the first protruding 510 may be formed in a smoothly curved shape.

That is, it is difficult for the boundary between the first recessed portion 520 and the first protruding portion 510 to be formed as a vertical surface, and may be formed in a natural curved shape as shown in the figure.

Accordingly, as the first pattern portion 500 is formed at the boundary between the first and second layers 110 and 120 of the double-layer electrode 20, the adhesion of the boundary between the first and second layers 110 and 120 is increased and excellent diffusivity and low internal resistance may be maintained. Thus, the rate characteristics and capacity retention rate of the electrode may be improved, and high energy density may be secured by securing a high reaction voltage.

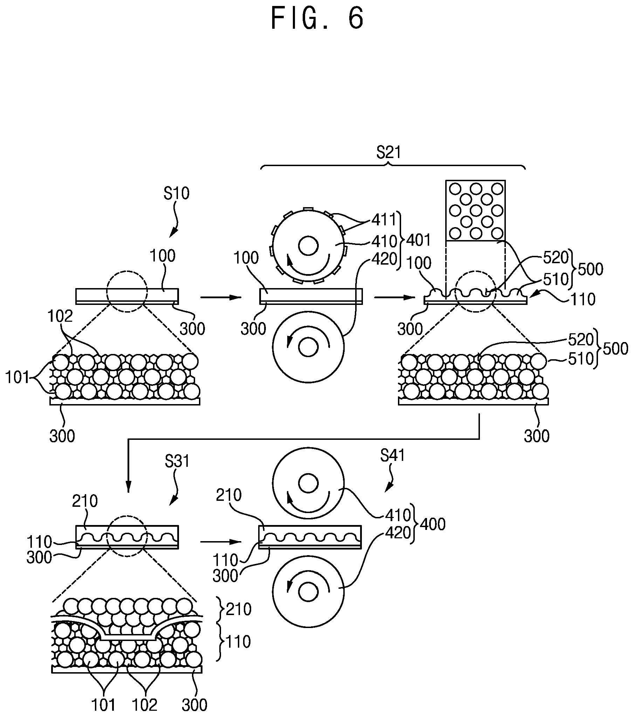

FIG. 6 is a process view illustrating a manufacturing method of the double-layer electrode of FIG. 5.

Referring to FIG. 6, in the manufacturing method of the double-layer electrode 20, the first layer 100 is formed on the base substrate 300 (step S10).

Here, the forming of the first layer 100 is substantially same as the forming of the first layer in FIG. 4

Then, the pressing part 401 presses the base substrate 300 and the first layer 100 formed on the base substrate 300 (step S21).

Here, the pressing part 401 includes a pair of the first and second rollers 410 and 420. The first roller 410 presses the upper surface of the first layer 100 on the first layer 100, and the second roller 420 presses the lower surface of the base substrate 300 under the base substrate 300.

A first pattern forming part 411 is formed at an outer surface of the first roller 410. The first pattern forming part 411 is formed as a protrusion that protrudes to a predetermined height along the outer surface of the first roller 410, as illustrated. The protrusion is formed uniformly on the outer surface of the first roller 410. Here, the protrusion may have a circular shape, an oval shape, a polygonal shape, and so on.

Due to the pressing for the first layer 100 and the base substrate 300, the first pattern portion 500 is formed on the upper surface of the first layer 100. Then, the first layer 100 is formed to be the first layer 110 having the first pattern portion 500.

Here, the first pattern portion 500 directly reflects the shape of the protrusion formed along the outer surface of the first roller 410. As illustrated in the figure, the first pattern portion 500 includes the first recessed portion 520 formed by the pressing of the protrusion and the first protruding portion 510 remained without the pressing of the protrusion.

In addition, when the protrusion of the first roller 410 has the circular shape, the first pattern portion 500 has the first recessed portion 520 having a uniformly arranged circular shape. Here, the circular shaped recessed portion 520 may be formed by pressing, and the remaining first protrusion 510 may remain circular, which is the first pattern forming part 411 may be selected according to the shape of the protruding protrusion.

Meanwhile, the first layer 110 is pressed as a whole at the same time as the first pattern portion 500 is formed, so the crystalline graphite 101 and the carbon 102 of the first layer 110 may form more dense and stable internal organization.

Accordingly, the first layer 110 is formed to have the first pattern portion 500, and then the second layer 210 is formed on the first layer 110 (step S31).

Here, the second layer 210 may be formed on the first layer 100 via the coating process, but not limited thereto. In addition, the second layer 210 includes the crystalline graphite 101, and the second layer 210 is formed by coating and drying, as explained above.

In the present example embodiment, the second layer 210 is formed on the first pattern portion 500, so that the boundary having the first protruding portion 510 and the first recessed portion 520 is formed between the first and second layers 110 and 210. Here, the protruding portion of the first layer 110 is formed as the recessed portion of the second layer 210, and the recessed portion of the first layer 110 is formed as the protruding portion of the second layer 210.

Then, after coating the second layer 210, the first roller 410 presses the upper surface of the second layer 210, and the second roller 420 presses the lower surface of the base substrate 300 (step S41).

Here, an additional first pattern forming part 411 is not formed at the outer surface of the first roller 410.

Then, the adhesion at the boundary between the first and second layers 110 and 120, and the second layer 210 is pressed as a whole, so the crystalline graphite 101 of the second layer 210 may form more dense and stable internal organization.

Then, the double-layer electrode 20 of FIG. 5 is manufactured.

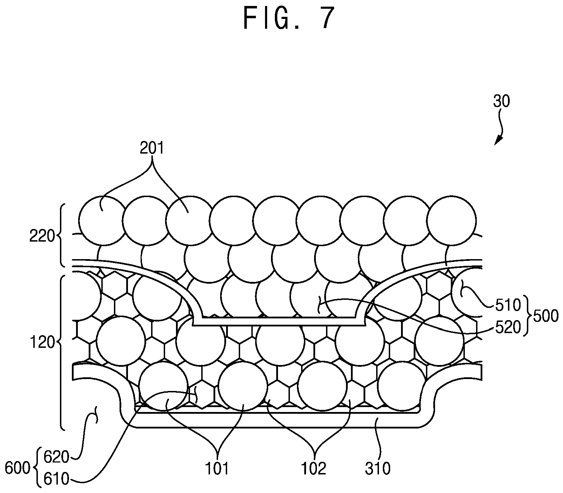

FIG. 7 is a cross-sectional view illustrating a double-layer electrode according to still another example embodiment of the present invention.

The double-layer electrode 30 according to the present example embodiment is substantially same as the double-layer electrode 20 of FIG. 5, except for a second pattern portion 600 formed on a lower surface of a first layer 120 and a lower surface of the base substrate 310, and then same reference numerals are used for the same elements and any repetitive explanation will be omitted.

Referring to FIG. 7, the double-layer electrode 30 according to the present example embodiment includes a first layer 120, and a second layer 220 formed on the first layer 120.

Here, the material or structural properties of the first and second layers 120 and 220 are substantially same as those of the first and second layers 100 and 200, respectively.

However, in the double-layer electrode 30 of the present example embodiment, the second pattern portion 600 is formed on a lower surface of the first layer 120 which is the boundary between the first layer 120 and the base substrate 310, and a lower surface of the base substrate 310.

Here, the first layer 120 and the base substrate 310 are formed to be in close contact with each other. As a predetermined pattern is formed on the lower surface of the base substrate 310, this pattern is also reflected on the lower surface of the first layer 120. Thus, this pattern is defined as the second pattern portion 600 for the convenience of explanation.

As illustrated in the figure, the second pattern portion 600 includes a second protruding portion 610 protruded downwardly and a second recessed portion 620 recessed upwardly, with respect to the first layer 120. The second protruding portion 610 and the second recessed portion 620 are continuously formed at the boundary. Here, the thickness of the base substrate 310 is relatively thinner, and then the pattern formed on the base substrate 310 is directly reflected on the lower surface of the first layer 120.

In addition, in the present example embodiment, the same pattern as the first pattern portion 500 of the double-layer electrode 20 of FIG. 5 is formed at the boundary between the first and second layers 120 and 220.

Then, in the double-layer electrode 30 of the present example embodiment, the second pattern portion 600 is formed at the base substrate 300 and the first layer 120, and the first pattern portion 500 is formed at the boundary between the first and second layers 120 and 220.

Here, as illustrated in FIG. 7, when the upper surface of the first layer 120 is protruded upwardly (the first protruding portion, 510), the lower surface of the first layer 120 is protruded upwardly (the second recessed portion, 620). Likewise, when the upper surface of the first layer 120 is protruded downwardly (the first recessed portion, 520), the lower surface of the first layer 120 is protruded downwardly (the second protruding portion, 610).

The upper surface and the lower surface of the first layer 120 are uniformly protruded and recessed, and thus the first and second pattern portions 500 and 600 are formed to form the thickness of the first layer 120 uniformly in a whole.

However, the first pattern portion 500 and the second pattern portion 600 cannot necessarily be formed so that the upper and lower surfaces of the first layer 120 are uniformly protruded and recessed as a whole. When producing the double-layer electrode 30 through an actual manufacturing process, the thickness of the first layer 120 may vary.

Accordingly, the double-layer electrode 30 includes the second pattern portion 600 in addition to the first pattern portion 500, so that the adhesion of the boundary between the first layer 120 and the base substrate 310 may be increased.

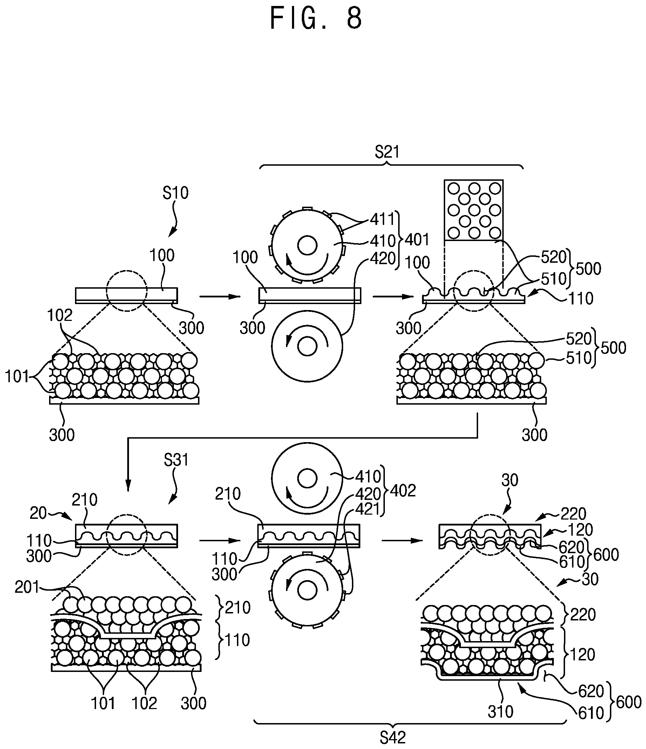

FIG. 8 is a process view illustrating a manufacturing method of the double-layer electrode of FIG. 7.

Referring to FIG. 8, in the manufacturing method of the double-layer electrode 30, the first layer 100 is formed on the base substrate 300 (step S10). The forming of the first layer 100 is substantially same as the forming of the first layer in FIG. 4 (step S10).

Then, the base substrate 300 and the first layer 100 are pressed by the pressing part 401 (step S21). The pressing of the first layer 100 is substantially same as the pressing of the first layer 100 of FIG. 6 (step S21).

Then, through the pressing (step S21), the first layer 100 is formed to be the first layer 110 having the first pattern portion 500, and the first pattern portion 500 includes the first recessed portion 520 and the first protruding portion 510.

Then, the second layer 210 is formed on the first layer 110 having the first pattern portion 500 (step S31). In addition, the forming of the second layer 210 is also substantially same as the forming of the second layer 210 of FIG. 6 (step S31).

Then, the second layer 210 is formed on the first pattern portion 500, and thus the protruding portion and the recessed portion are formed on the lower surface of the second layer 210 but the upper surface of the second layer 210 is flat.

Then, the upper surface of the second layer 210 and the lower surface of the base substrate 300 are pressed by the pressing part 402 additionally (step S42).

Here, the pressing part 402 includes a pair of the first and second rollers 410 and 420, and a second pattern forming part 421 is formed on an outer surface of the second roller 420.

Then, the first roller 410 presses the upper surface of the second layer 210 with a smooth outer surface, but the second roller 420 presses the lower surface of the base substrate 300 with the outer surface on which the second pattern forming part 421 is formed. Here, the second pattern forming part 421 may be formed so that a predetermined pattern protrudes from the outer surface of the second roller 420, as the first pattern forming part 411. Thus, the predetermined pattern is transferred on the lower surface of the base substrate 300 due to the protruding portion.

In addition, the second pattern forming part 421 may have a circular shape, an oval shape, a polygonal shape and so on like the first pattern forming part 411. However, for the overall shape uniformity of the double-layer electrode 30, the second pattern forming part 421 may be formed as the same shape of the first pattern forming part 411.

Due to the pressing of the pressing part 402, the upper surface of the second layer 210 is pressed to be flat and to be formed as the second layer 220. The base substrate 300 is pressed by the pressing of the second pattern forming part 421, and thus is to be formed as the base substrate 310 having the second pattern portion 600. Here, as the second pattern portion 600 is formed in the base substrate 310, the lower surface of the first layer 110 is also formed to be the first layer 120 having the second pattern portion 600. Then, the double-layer electrode 30 is manufactured.

The lower surface of the first layer 120 and the base substrate 310 is formed to have the second recessed portion 620 and the second protruding portion 610. The second recessed portion 620 is recessed by the pressing of the second pattern forming part 421, and the second protruding portion 610 is protruded without the pressing of the second pattern forming part 421.

In addition, the arrangement of the recessed and protruded patterns of the second pattern portion 600 may be the same as the arrangement of the recessed and protruded patterns of the first pattern portion 500, to maintain the thickness of the first layer uniformly in a whole, as explained above. To this end, the alignment of the second roller 420 may be controlled in the pressing of the pressing part 402 (step S42).

Accordingly, unlike simply pressing the second layers 200 and 210 and the base substrate 300 flat in the manufacturing process of the double-layer electrodes 10 and 20 described above, the pressing is performed to form a predetermined pattern in the base substrate 310 additionally, and thus the adhesion between the first layer 120 and the base substrate 310 is increased more and the structural stability may be more enhanced.

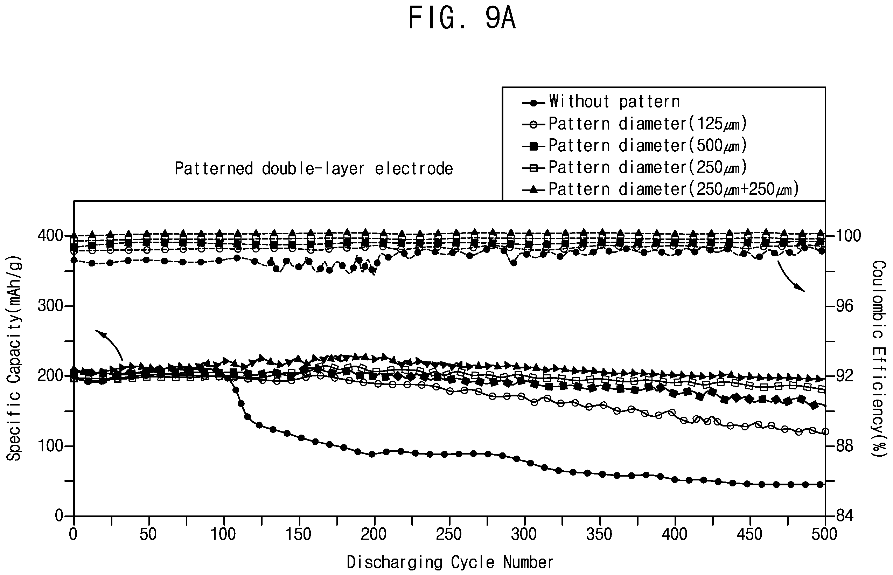

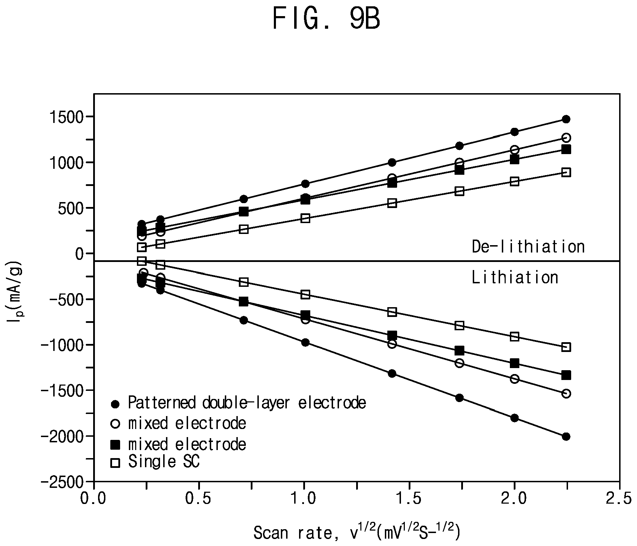

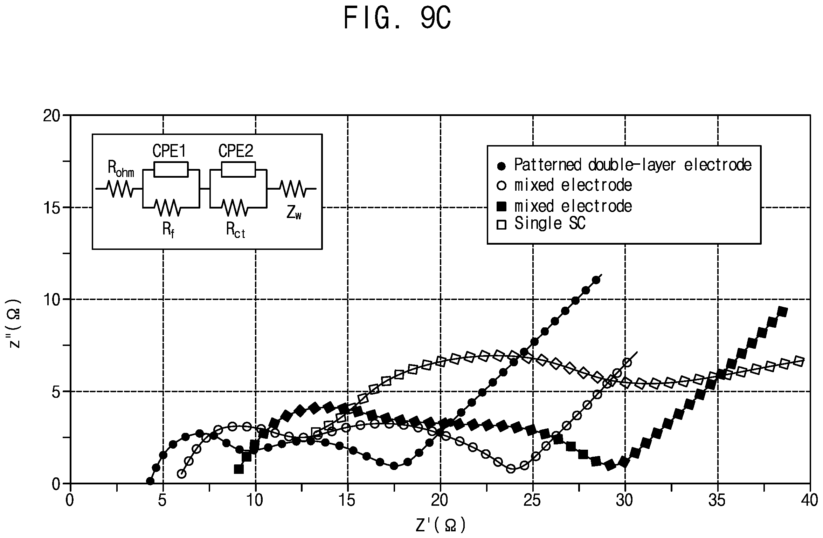

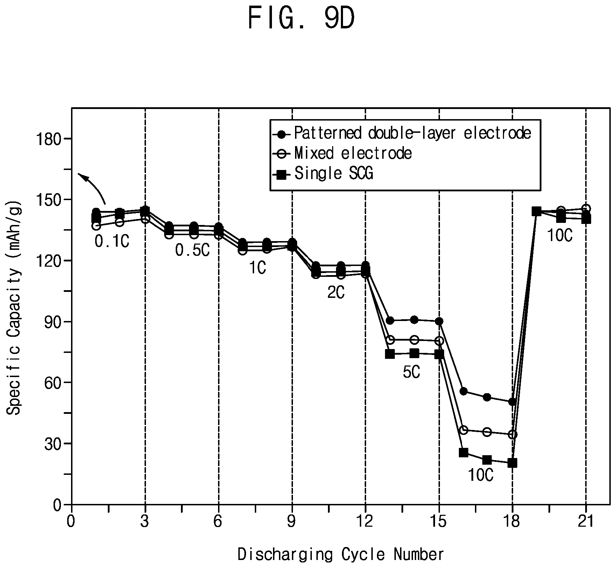

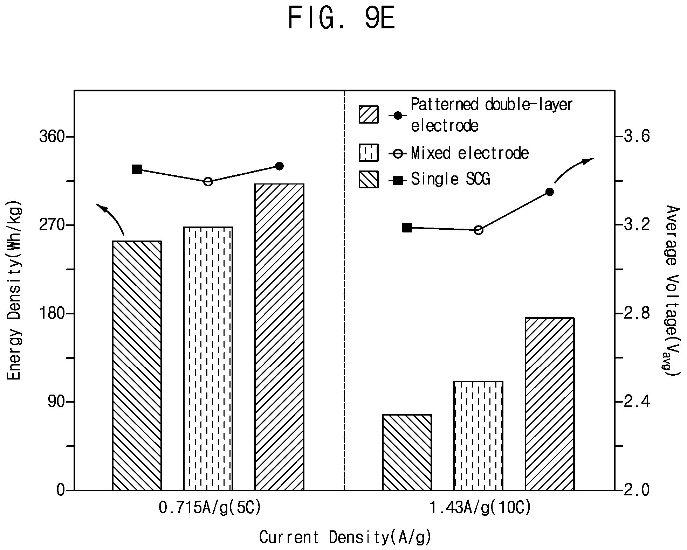

FIG. 9A, FIG. 9B, FIG. 9C FIG. 9D and FIG. 9E are graphs showing properties of the double-layer electrode of FIG. 7.

FIG. 9A to FIG. 9E are graphs for explaining the properties of the double-layer electrode 30 of FIG. 7, but the double-layer electrode 20 of FIG. 5 may have the same properties.

Referring to FIG. 9A, in contrast to the double-layer structure (No patt.) in which the pattern portion is not formed, the double-layer structure having the pattern portion (Pattern size) may maintain the capacity of the electrode more stably when charging and discharging through repetitive cycles.

In addition, in the case of the size of the pattern portion, when the pattern portion has a circular shape and the diameter of the pattern portion is approximately 250µm (pattern size, 250µm), a relatively high capacitance of the electrode may be maintained. In addition, when the pattern portion is formed simultaneously between the first and second layers and on the base substrate (pattern size, 250µm + 250µm), high electrode capacity may be maintained.

In addition, FIG. 9B is a linear graph that collects only the pick current for each voltage scan rate in cyclic voltammetry, which means that the diffusivity of the electrode increases as the slope of the linear graph increases.

Thus, referring to FIG. 9B, in contrast to the case of forming an electrode using only one material (Single SC, Single SCG) or the case of forming an electrode by simple synthesis of two materials (Blended SC & SCG), a high linear graph slope is observed in the case of electrodes formed as the double-layer electrode having the pattern portion (Bi-layered & patterned SC & SCG), as shown in FIG. 5 and FIG. 7. Thus, it may be seen that battery performance may be improved even during relatively fast charging and discharging as the diffusivity of the electrode increases.

In addition, FIG. 9C is a Nyquist plot obtained through impedance measurement, which is a graph indicating the total internal resistance of the battery. In FIG. 9C, the internal resistance is deceased as the size of Z'(Ω) closest to the X-axis on the right side of the second semicircle decreases, including Ohmic (X intercept), SEI (first semicircle), and Charge transfer (second semicircle) resistance on the graph.

Thus, referring to FIG. 9C, compared to other electrodes, in the case of electrodes formed as the double-layer electrode having the pattern portion (Bi-layered & patterned SC & SCG), it may be seen that the size of the semicircle is relatively small, and this confirms that it is possible to manufacture a battery with excellent performance and low internal resistance.

In addition, FIG. 9D is a graph showing the capacity of the electrode according to the number of discharges.

As confirmed in FIG. 9D, compared to other electrodes, in the case of electrodes formed as the double-layer electrode having the pattern portion (Bi-layered & patterned SC & SCG), the rate characteristics of the electrode remain relatively high, even though the effective capacity of the battery decreases as the discharge rate increases.

Further, FIG. 9D is a graph showing energy density according to current density.

As also confirmed in FIG. 9D, compared to other electrodes, in the case of electrodes formed as the double-layer electrode having the pattern portion (Bi-layered & patterned SC & SCG), high capacity and high reaction voltage may be secured, resulting in high energy density, even when performing rapid charging and discharging.

Accordingly, as in the present example embodiments explained referring to FIG. 5 and FIG. 7, in the case of the double-layer electrodes 20 and 30 including the pattern portion, it may be confirmed that when configured as a battery, they have excellent battery performance and efficiency in various aspects.

According to some exemplary embodiments of the present invention, as an electrode active material, the first layer having the crystalline graphite and the carbon mixed with each other, and the second layer having the crystalline graphite are formed. Thus, a synergistic effect of the advantages of fast ion transport ability may be performed through the advantages of high energy density of the crystalline graphite and the porous structure of the carbon, and thus even with rapid charging and discharging, it has high energy density and may improve battery performance.

In addition, even when various negative or positive electrode materials are applied as the electrode active material, the protruding portion and the recessed portion are formed between the first and second layers as the first pattern portion, so that an adhesive force of the boundary between the first and second layers may be increased and excellent diffusivity and low internal resistance may be maintained. Then, the rate characteristics and capacity retention rate of the electrode may be improved, and high energy density may be secured by securing a high reaction voltage.

The protruding portion and the recessed portion are formed between the first layer and the base substrate as the second pattern portion, and thus the adhesive force of the boundary between the first layer and the base substrate. Then, a stable double-layer electrode structure may be maintained and a long battery life may be secured.

In addition, in forming the first pattern portion or the second pattern portion, the pressing is performed using the roller having the protruding pattern at an outer surface. Thus, an adhesion of the boundaries among the first layer, the second layer and the base substrate may be increased, and a stable structure between inner particles of the first and second layers may be maintained and the first and second pattern portions may be formed at the same time. Then, the efficiency of the process may be improved.

Having described exemplary embodiments of the present invention, it is further noted that it is readily apparent to those of reasonable skill in the art that various modifications may be made without departing from the spirit and scope of the invention which is defined by the metes and bounds of the appended claims.

## Claims

1. A double-layer electrode comprising:
a first layer formed on a base substrate, and having crystalline graphite and carbon mixed with each other; and
a second layer formed on the first layer, and having the crystalline graphite.

2. The double-layer electrode of claim 1, wherein in the first layer, the crystalline graphite and the carbon are mixed with a ratio of 7:3 to 3:7.

3. A double-layer electrode comprising:
a first layer formed on a base substrate, and having an electrode active material; and
a second layer formed on the first layer, and having an electrode active material,
wherein a first pattern portion is formed between a boundary between the first layer and the second layer.

4. The double-layer electrode of claim 3, wherein the electrode active material comprises graphite, carbon, transition metal oxide based cathode materials or anode materials.

5. The double-layer electrode of claim 3, wherein the electrode active material of the first layer comprises spherical crystalline graphite (SCG) or soft carbon (SC), and the electrode active material of the second layer comprises the spherical crystalline graphite.

6. The double-layer electrode of claim 3, wherein the first pattern portion comprises a protruding portion and a recessed portion.

7. The double-layer electrode of claim 3, wherein a second pattern portion is formed under the base substrate and the first layer.

8. The double-layer electrode of claim 7, wherein the second pattern portion comprises a protruding portion and a recessed portion.

9. The double-layer electrode of claim 6 or claim 8, wherein the protruding portion has a circular shape, an oval shape or a polygonal shape.

10. A manufacturing method of a double-layer electrode, the method comprises:
forming a first layer having an electrode active material on a base substrate;
pressing an upper surface of the first layer using a first roller; and
forming a second layer having an electrode active material on the first layer.

11. The method of claim 10, wherein in the pressing using the first roller,
a first pattern portion is formed on the first layer, due to a first pattern forming part formed along an outer surface of the first roller.

12. The method of claim 11, wherein the first pattern forming part comprises a protruding pattern, and the first pattern portion comprises a protruding portion and a recessed portion.

13. The method of claim 11, wherein in the forming the second layer,
the second layer is formed on the first layer on which the first pattern is formed, and then the first pattern portion is formed at a boundary between the first and second layers.

14. The method of claim 13, wherein in the forming the first layer and in the forming the second layer,
the first and second layers are formed via one of coating processes having a wet coating, a dry coating, and thermally induced phase separation (TIPS) coating.

15. The method of claim 10, further comprising:
pressing a lower surface of the base substrate using a second roller.

16. The method of claim 15, wherein in the pressing using the second roller,
a second pattern portion is formed on a lower surface of the first layer and the base substrate, due to a second pattern forming part formed along an outer surface of the second roller.

17. The method of claim 16, wherein the second pattern forming part comprises a protruding pattern, and the second pattern portion comprises a protruding portion and a recessed portion.

18. The method of claim 15, wherein in the pressing the lower surface of the base substrate using the second roller, the upper surface of the first layer is pressed using the first roller at the same time.
